Europäisches Patentamt

European Patent Office

Office européen des brevets

(19)

(11) Publication number: **0 180 450 B1**

# (12) EUROPEAN PATENT SPECIFICATION

(45) Date of publication of patent specification: **22.05.91**   (51) Int. Cl.⁵: **H04N 5/455**

(21) Application number: **85307801.2**

(22) Date of filing: **29.10.85**

(54) Television display apparatus having character generator with non-line-locked clock.

(30) Priority: **31.10.84 US 666861**
**31.10.84 US 666862**

(43) Date of publication of application:
**07.05.86 Bulletin 86/19**

(45) Publication of the grant of the patent:
**22.05.91 Bulletin 91/21**

(84) Designated Contracting States:
**AT DE FR GB IT SE**

(56) References cited:
| | |
|---|---|
| DE-B- 2 449 536 | DE-C- 2 909 155 |
| US-A- 3 454 719 | US-A- 3 984 633 |
| US-A- 4 099 204 | US-A- 4 224 639 |
| US-A- 4 281 345 | US-A- 4 346 407 |
| US-A- 4 464 679 | US-A- 4 467 357 |
| US-A- 4 477 841 | |

(73) Proprietor: **RCA LICENSING CORPORATION**
**2 Independence Way**
**Princeton New Jersey 08540(US)**

(72) Inventor: **Tults, Juri**
**5337 Hawks Point Road**
**Indianapolis Indiana 46226(US)**
Inventor: **Willis, Donald Henry**
**5175 East 74th Place**
**Indianapolis Indiana(US)**

(74) Representative: **Smith, Thomas Ian Macdonald**
**et al**
**GE/RCA Patent Operation Burdett House, 4th**
**Floor 15-16 Buckingham Street**
**London WC2N 6DU(GB)**

EP 0 180 450 B1

## Description

This invention relates to television display apparatus of the type having a character generator for producing alphanumeric or graphic characters in raster scan form for display along with (or in place of) a received "picture" signal and which includes a clock for controlling the timing of picture elements produced by the character generator.

Raster scan caption generators are useful in television receivers and monitors for displaying various types of information such as teletext data, time and channel settings, computer data and so on. In a typical generator individual alphanumeric characters or graphic symbols (herein referred to generically as "characters") are represented by a dot matrix pattern stored in a read only memory (ROM). A character is generated for display by transferring a desired dot pattern from the ROM to a high speed buffer and sequentially shifting the character "dots" or "pixels" (picture elements) out of the buffer with a pixel or dot clock. The serial signal, thus formed, is applied to a kinescope in a timed relation to the vertical and horizontal sweep so as to display the dot matrix pattern at a desired location on the raster.

It is known that the clock which determines the pixel timing may be either "line locked" or "burst-locked". A line-locked clock is one which is synchronized to operate at a frequency which is an integral multiple of the horizontal line frequency. The advantage of line-locking the pixel clock is that each character dot of the caption signal will have a stable position on a displayed line even though the line frequency may vary. If, for example, the line frequency decreases making the sweep longer, the dot clock frequency will also decrease proportionately, thereby increasing the pixel period to compensate for the longer sweep time. The net effect for a line-locked pixel clock is that variations of the pixel width and position due to variations in the horizontal line frequency are relatively unnoticeable. This is a distinct advantage when displaying captions along with a video signal provided by a source which may have a non-standard or unstable line frequency (e.g., a video tape recorder, video disc player, etc.).

Notwithstanding the advantages of line-locking the character generator dot clock, there are applications where it is advantageous to employ "burst-locking" instead. In a burst-locked system, the clock used for pixel timing is locked to a multiple of the color subcarrier frequency by means of a burst keyed phase locked loop (PLL). An advantage of burst locking is that conventional color television receivers include a color oscillator locked to incoming burst thereby eliminating the need for a separate high frequency dot clock for the character generator. The color subcarrier reference frequency is also useful for decoding teletext data transmitted during the vertical blanking interval of received video signals. Burst-locked clocking is particularly important in digital television receivers where the composite video signal is sampled and converted to digital form for processing. In such systems the use of a clock locked to the color subcarrier reference frequency aids in minimizing cross-color effects and other undesirable artifacts in displayed images and simplifies chroma demodulation. An integrated circuit which includes a teletext decoder and a character generator that is switchable between teletext input provided by the teletext decoder and an external data input and which is intended for use with a burst-locked clock is described at pages 139-141 of the data book entitled "DIGIT 2000 VLSI DIGITAL TV SYSTEM" published September 1981, by Deutsche ITT Industries GmbH.

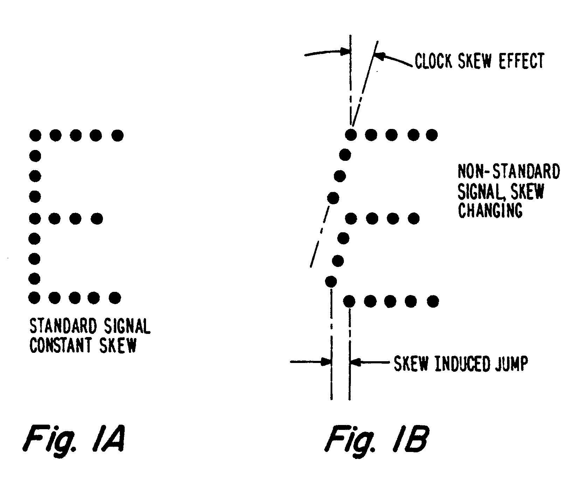

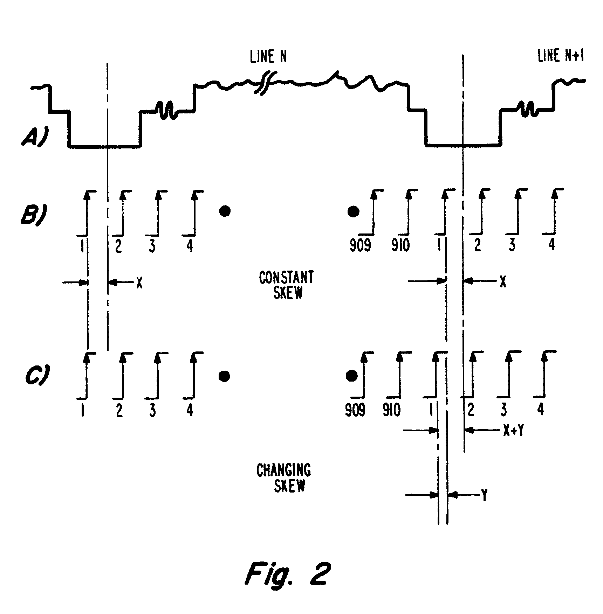

The present invention resides, in one aspect, in the recognition of a problem which can occur in television systems of the type wherein the clock for the character generator is locked to a multiple of the color subcarrier frequency rather than to a multiple of the line scanning (horizontal synchronizing) frequency. The problem, explained in detail subsequently with reference to FIGURES 1A, 1B and 2, is manifested as temporal and spatial distortions of displayed characters which can occur when receiving "non-standard" video signals. A non-standard video signal, as used herein, is defined as one wherein the ratio of the color subcarrier frequency to the horizontal line frequency does not conform to a specific fixed standard (e.g. 227.5:1 for NTSC or 283.75:1 for PAL). Sources which may produce non-standard signals include video tape recorders, video disc players, video game units, home computers, etc.

In another known form of on-screen display (OSD) character generator used in television receivers, an inductance-capacitance (LC) or resistance-capacitance (RC) oscillator is used for providing the clock signal which determines the timing of character elements or "pixels" provided by the character generator. The oscillator frequency (about 5MHz) determines the width of the smallest element of displayed characters. In this form the oscillator is line-locked with the horizontal scanning signal to avoid a ragged or noisy appearance of vertical edges of displayed characters. Typically the oscillator is of the "start-stop" kind which is disabled during the presence of the horizontal synchronizing pulse and enabled at the termination of the synchronizing pulse.

Where the oscillator is included on the same integrated circuit with the OSD character generator, two pins of the integrated circuit must be "dedicated" to providing connections for discrete external frequency determining components (e.g., RL or RC elements). These external components of the oscillator present a potential source of radiation which may interfere with other signals in the receiver and so require filtering to prevent artifacts from appearing in displayed images. A further problem is that tolerance variations of the LC or RC oscillator components may require a factory adjustment for correct positioning of displayed characters. Also, changes in operating temperature and aging of circuit components can result in noticeable changes in the horizontal position of displayed characters. Further disadvantages are that at least one of the oscillator elements in the known system must be frequency adjustable and the external elements require printed circuit board space for mounting which adds to the overall cost of the OSD feature of the television receiver.

Television receivers are known which include a 4 MHz crystal oscillator as a signal source for a frequency synthesis type of tuner. Receivers are under consideration wherein on-screen display logic is to be included on the same integrated circuit as the frequency synthesis tuning system. In view of the foregoing, it is herein recognized that it would be advantageous to use the existing 4 MHz crystal oscillator as a clock source for the OSD character generator. Heretofore, this possibility has not been considered to be practical for various reasons. For example, the 4 MHz oscillator must be running continuously to satisfy the requirements of the tuning system. But even if it were possible some way to re-design the frequency synthesizer logic to work with a start-stop oscillator, a crystal oscillator cannot be started quickly enough to meet the needs of the OSD generator because of the very high "Q" of the crystal. When a typical crystal oscillator is enabled the oscillations build up slowly in a period of time measured in milliseconds. This is simply too slow to meet the clock timing requirements of an OSD character generator.

The present invention is therefore directed, in another aspect, to meeting the need for a reduction in line-to-line variations in the timing of character elements provided by a character generator in a television receiver where the character generator is clocked by a free running oscillator. As used herein, "free running" means that the oscillator is not locked to the line frequency of the video input signal supplied to the receiver (although it may have a very stable and accurate frequency).

A receiver embodying the invention comprises a a video processing means coupled to supply a video output signal to a display means, the video output signal having a horizontal synchronizing component. An oscillator means provides a clock signal that is not synchronous with the horizontal synchronizing component of the video output signal. A character generator means supplies a character signal in raster scan form to the display means for display with the video output signal, each line of the character signal comprising a plurality of character elements. The character generator means has a timing clock input coupled via a clock signal path to the oscillator means for controlling the timing of the character elements in accordance with the clock signal. A synchronization means is provided for imparting a delay to the presentation of said character signal to the display means in response to the time relationship between the clock signal and the horizontal synchronizing component of the video signal. To this end, a controlled delay may be interposed in the clock signal path for effectively imparting delay to the clock signal supplied to the character generator means. Alternatively, where appropriate, a controlled delay may be interposed between the character generator means and the display device.

The first aspect of the invention concerning a television display apparatus having a character generator driven by a burst-locked clock, is illustrated by the first group of the accompanying drawings on sheets 1-6, in which

FIGURES 1A, 1B, and 2 are diagrams illustrating certain aspects of the problem to which this aspect of the invention is addressed;

FIGURE 3 is a block diagram of a digital television receiver embodying the invention;

FIGURE 4 is a detailed block diagram of portions of the receiver of FIGURE 3;

FIGURE 5 is a detailed block diagram of a delay element suitable for use in the receiver of FIGURE 1; and

FIGURE 6 is a block diagram illustrating a modification of the receiver of FIGURE 1.

The second aspect of the invention, concerning the use of a free-running oscillator to provide the clock signals, is illustrated in the second group of drawings on sheets 7-9, in which:

FIGURE 1' is a block diagram of a television receiver embodying the invention;

FIGURE 2' is a detailed block diagram of clock delay and control elements of the receiver of FIGURE 1'; and

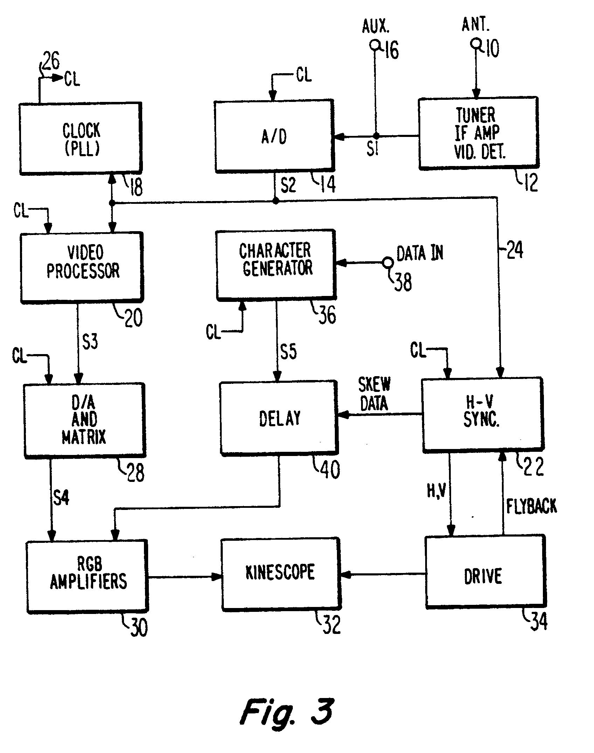

FIGURE 3' is a waveform diagram illustrating certain aspects of operation of the delay and control elements of FIGURE 2'.

Considering now the first aspect in more detail, in FIGURE 2 waveform "B" represents the output of a clock that is phase-locked to operate at four times the frequency of the color burst component of a video signal represented by waveform A for the case where the video signal conforms to the NTSC standard in which there are exactly 227.5 cycles of the color subcarrier per line. As shown, there are exactly 910 clock cycles during one line interval and thus the position (X) of the first clock pulse (No. 1) with respect to the center of the horizontal synchronizing pulse is the same in line N as it is in the following line, N + 1. Thus, if the clock were used to time the pixels produced by a character generator in a receiver in which the horizontal sweep was locked to the line rate of waveform A, then the displayed character "dots" would be properly vertically aligned. For example, a character dot initiated by a given clock pulse on line N would be in exactly the same display position on the next line N + 1 as illustrated in FIGURE 1A. For this "standard signal" case, the "skew" or timing difference "X" between the clock and the horizontal synchronizing signal is of no consequence because it is constant from line-to-line.

For non-standard signals, as hereinbefore defined, the skew is not constant from line-to-line (waveform C of FIGURE 2) and this changing skew or "phase slip" causes spatial and temporal distortion of characters as shown in FIGURE 1B. This results because the deflection system is locked to sync (waveform A) but the pixel clock, being locked to burst, is continuously precessing (or "slipping") by an amount "Y" with respect to sync for non-standard signals (waveform C). This makes the displayed character pixels precess, also, with respect to deflection. When a full cycle of clock is "slipped", an abrupt discontinuity will occur ("jump", FIGURE 1B) and this discontinuity will move vertically up or down the displayed characters because it will occur on different lines of different fields. These distortions are illustrated in FIGURE 1B.

The problem of temporal and spatial distortion of displayed characters is solved, in accordance with the invention, in the receiver of FIGURE 3 by measuring the skew and effectively imparting delay to the characters in accordance with the skew measurement. By this means the character pixel positions are caused to effectively "track" the skew, and thus assume a fixed position on a line for both standard and non-standard signals even though the clock is not locked to the horizontal synchronizing component of the video input signal.

The receiver includes an antenna (ANT.) input terminal 10 coupled via a tuner, IF amplifier and video detection unit 12 of conventional design to the input of an analog-to-digital converter 14. Unit 12 processes RF modulated video signals applied to terminal 10 to provide a baseband analog video signal S1 which is converted to digital form (signal S2) in (A/D) converter 14. The RF signal may be either a standard broadcast signal provided by an antenna or cable source or it may be a non-standard signal (as hereinbefore defined) provided by a tape recorder, video game, computer or other source. An auxilliary (AUX.) input terminal 16 is provided for obtaining the analog baseband video signal S1 from a source having provisions for baseband video output.

The digitized video signal S2 is applied to a clock 18, to a video processor 20 and to a horizontal/vertical synchronizing (H-V SYNC) unit 22 via a bus 24. Clock 18 comprises a burst keyed phase-lock-loop (PLL) and provides a clock (CL) output signal having a frequency locked to a multiple (e.g., four-times) of the frequency of the chroma subcarrier component of video signal S2. For NTSC and PAL standard signals, the clock frequencies are about 14.318 MHz and 17.734 MHz respectively. For SECAM systems the clock would be locked to four times the center frequency of the SECAM bell filter (e.g., about 17.144 MHz).

The clock signal CL is supplied via a bus 26 (indicated by arrow heads) to A/D converter 14 for controlling the sampling of signal S2 and is also applied along with digitized video signal S2 to a digital video processor 20 where signal CL controls the timing of various processing functions (e.g., color separation, peaking, contrast control, hue and saturation control etc.) provided by processor 20. The aforementioned data book describes a complete digital television receiver including digital video processor for NTSC, PAL and SECAM standards that are suitable for use as processor 20.

The processed digital video signal S3 provided by processor 20 is converted to analog RGB form in a digital-to-analog (D/A) converter and matrix unit 28 and the RGB signals S4 are applied by three RGB amplifiers in unit 30 to a kinescope 32 to be displayed. Deflection signals for kinescope 32 are generated by the horizontal/vertical synchronizing unit 22 and amplified in a drive unit 34. Characters for display on kinescope 32 are provided by a character generator 36 having a clock input coupled via bus 26 to the output of clock 18 for controlling the timing of the character "dots" or picture elements (pixels) and a data input 38 for connection to a suitable source of data to be displayed (e.g., a teletext decoder, time clock, channel indicator, external computer, etc.). The character signal S5 produced by generator 36 comprises, illustratively, R,G,B and blanking signals and is applied to the R,G and B amplifiers in unit 30 via a delay unit 40. The blanking signal is used to blank the processed video signal S4 in unit 30 in locations where characters are being displayed. Generator 36 and units 22, 30 and 34 are of conventional design and may be implemented as described in the aforementioned data book.

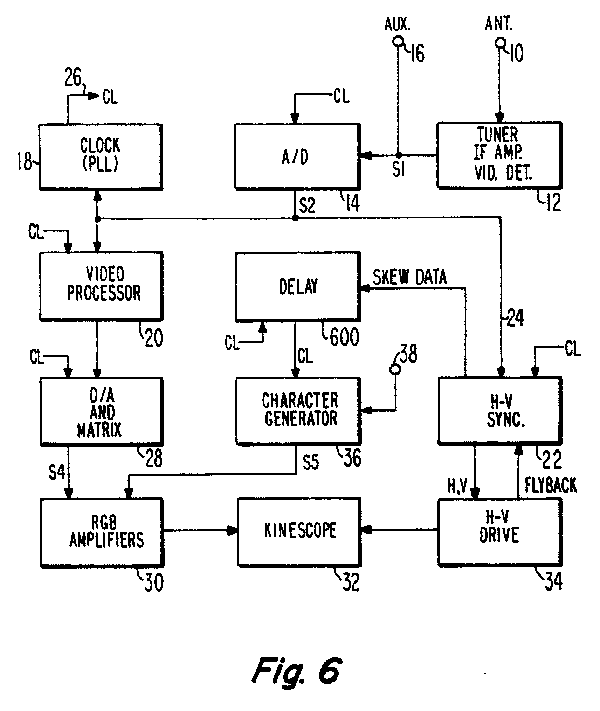

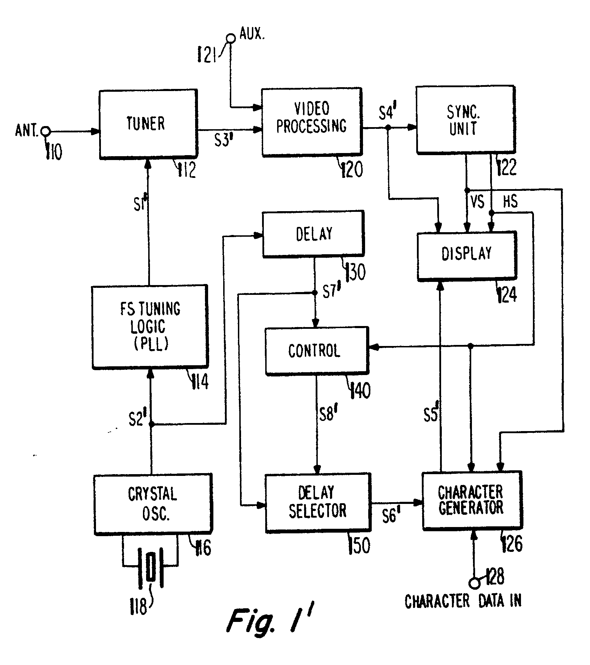

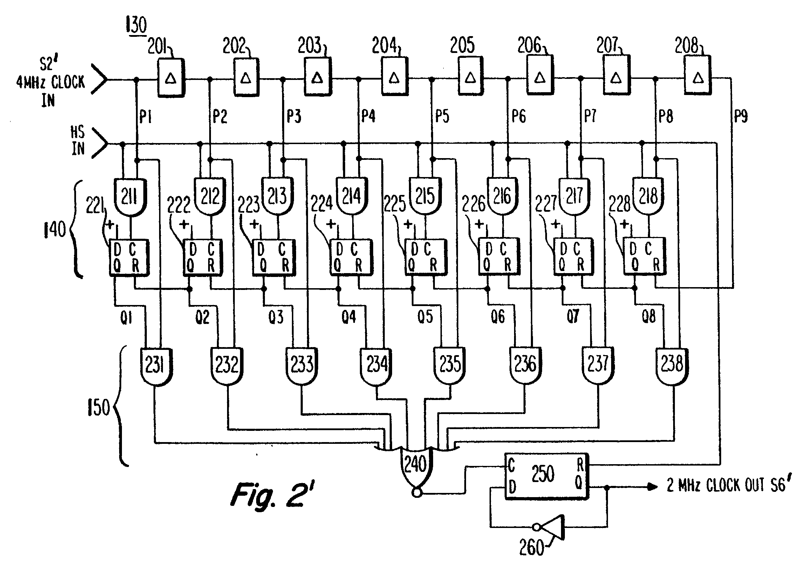

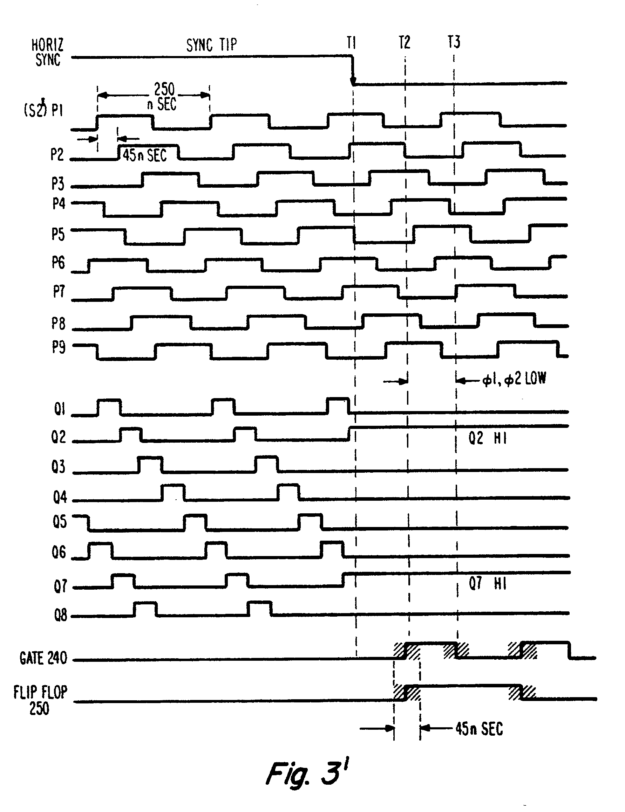

The function of delay unit 40, in accordance with the invention, is to impart an effective delay to characters provided by generator 36 where the delay is proportional to the skew between clock signal CL and the horizontal synchronizing component of the digitized video signal S2. In this example of the invention, the skew compensating delay is realized by delaying the output signal S5 (R,G,B and blanking) produced by character generator 36. A similar result may be obtained, as will be discussed in connection with FIGURE 6, by applying the skew compensating delay to the clock signal CL supplied to generator 36. The skew data, for either case, is from a phase comparator in synchronizing unit 22 which provides a number which represents a fraction of a clock period. This fraction is the portion of a clock cycle equal to the time difference between the center of the horizontal synchronizing pulse and the last clock edge (positive transition) which precedes the center as illustrated by interval X in FIGURE 2B or interval X+Y in FIGURE 2C. Alternatively, one may select another point in the horizontal synchronizing pulse or blanking period to make the skew measurement. An advantage of using the center of the sync pulse as compared, for example, with using only one edge, is that when the center is used the pulse may be more narrowly filtered (which would disturb the accuracy of using an edge) and the center calculated by averaging the leading and trailing edges, thereby reducing the effects of noise in the measurement.

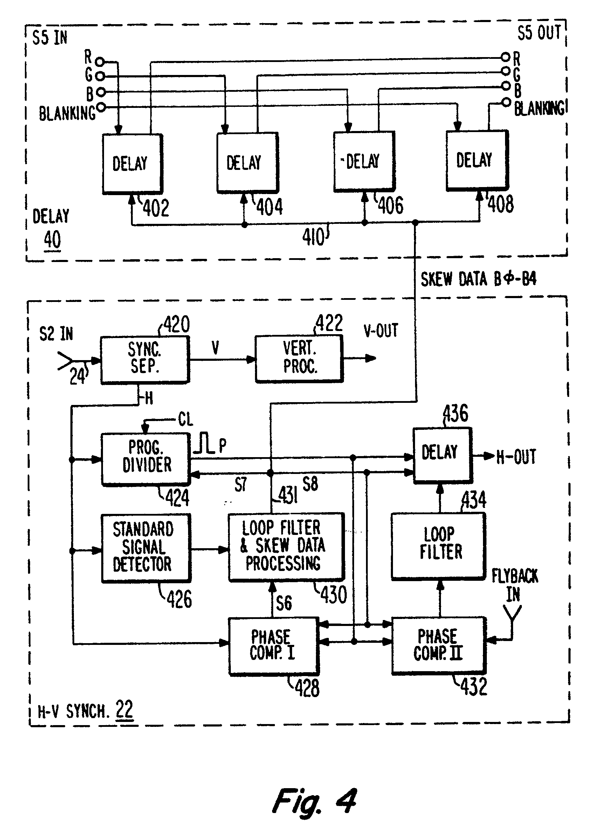

FIGURE 4 is a detailed block diagram of delay unit 40 and synchronizing unit 22 of the receiver of FIGURE 1. Unit 40 comprises four individual variable delay units 402-408 having respective inputs coupled to receive the R, G, B and blanking signals (S5 IN) from character generator 36 and having outputs coupled to supply the skew compensated R,G,B and blanking signals (S5 OUT) to amplifier 30. The delay control terminals of units 402-408 are all connected to a 5-bit bus 410 for receiving the skew data from unit 22. As previously explained, unit 40 shifts (delays) the character data by an amount proportional to the clock (CL) skew with respect to horizontal sync. The skew measurement is made in unit 22 at the start of each line, averaged to reduce noise effects and the delay compensation of unit 40 is set to the averaged skew value thereby effectively compensating for the effect of clock phase precession when receiving a non-standard video input signal.

The block diagram of unit 22 is a simplified representation of the type "MAA 2500 Deflection Processor Unit" integrated circuit which is described in more detail in the aforementioned ITT databook. Unit 22 includes elements for making the skew measurements, averaging them and disabling the skew data when "standard" signals are being received. In unit 22 the video signal S2 is applied to a sync separator unit 420 which supplies a vertical sync signal, V, to a vertical processing unit 422 and a horizontal sync signal, H, to a programmable divider 424, to a standard signal detector 426 and to phase comparator I 428. Unit 422 includes suitable vertical pulse integration and synchronization circuits for processing the vertical sync signal V for application to kinescope 32. Unit 424 divides the clock signal to provide line rate output pulses "P" which are compared by phase comparator I 428 with the sync pulses of video signal S2. The phase comparator output signal S6 is applied to a loop filter and skew data processing unit 430 in which a low pass filter averages the phase measurements. The integer portion S7 of the averaged signal is applied via bus 431 to divider 424 to change the division factor in a sense to phase lock pulse P to the incoming sync component of video signal S2. When locked, pulse P will differ in timing from sync by no more than a fraction of one cycle of the clock signal CL. The fractional portion of each phase measurement represents the time interval between the clock signal CL and horizontal sync in terms of fractions of a clock cycle. The skew data signal, which represents the line-by-line precession of the clock signal relative to sync, is "predicted" for a given line by storing the fractional portion of the average phase measurement from the previous line and adding the stored number to the previous skew data value. The fractional portion of the resultant sum is applied as the current skew data signal S8 to delay unit 40. If an overflow results from the sum, then the S7 signal is incremented by one to delay pulse P by one integer clock cycle. The skew data signal thus formed is also applied to phase comparators 428 and 432 to provide fine resolution of the phase comparison since the pulse P only occurs on clock edges and thus represents coarse phase information. The standard signal detector 426 is in essence a lock detector which disables loop filter 430 when the ratio existing between the color subcarrier frequency and the horizontal frequency corresponds to a standard ratio (910:1 for NTSC or 1135:1 for PAL).

For the purpose of equalizing phase changes in the horizontal output stage due to switching response tolerances or loading of the deflection circuits, the pulse "P" passes through a further phase-lock-loop comprising phase comparator II 432, loop filter 434 and delay unit 436. In the phase comparator II 432, the phase position between the output signal of the programmable divider 424 and the leading edge of the horizontal flyback pulse is measured (with fine resolution being provided by the skew data signal S8). The deviation from the desired phase position is filtered in filter 434 and fed to delay unit 436 which phase shifts the pulse "P" to provide the horizontal drive signal "H-out" for the horizontal driver in such a way that the horizontal flyback pulse acquires a fixed phase position with respect to pulse "P" which, in turn, retains a fixed phase position with respect to the horizontal sync component of the video signal. To avoid phase jitter in the horizontal PLL circuit, unit 436 includes an additional gate delay line for pulse "P" which is controlled by the skew data signal S8 to provide a fine resolution of the horizontal drive signal.

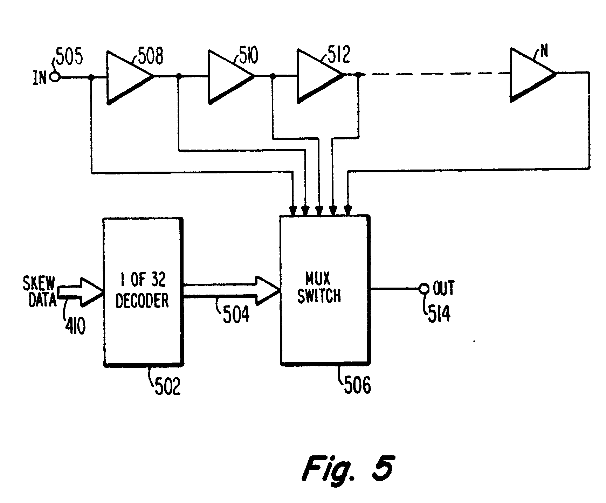

Delay units 402-408 of FIGURE 4 for the receiver of FIGURE 1 may be implemented as shown in FIGURE 5. The 5-bit skew data bus 410 is applied to a 1-of-32 decoder 502 which supplies decoder outputs via bus 504 to a multiplex switch 506. An input signal to be delayed (e.g., R,G,B or blanking) is applied to the input terminal 505 a cascade connection of delay elements 508-512-N which may be passive devices (e.g., R-C networks) or active devices (e.g., non-inverting gates or buffer amplifiers). The outputs or taps of the cascade connection are coupled to the inputs of switch 506 which couples the output of a selected element to an output terminal 514 in response to the decoded skew data supplied by bus 504. If, for example, the skew data is zero, switch 506 couples input terminal 505 to output terminal 414. If the data value is "3" (00011 binary), switch 506 couples the output of element 512 to terminal 514 thereby imparting a delay to the input signal of three "units". A unit delay, illustratively, may be on the order of one sixteenth of the period of clock signal CL (e.g., about four nanoseconds for a 14.3 MHz clock) to thereby provide a total delay range of about two full clock periods.

FIGURE 6 represents a modification of the receiver of FIGURE 1 wherein the output signal S5 of character generator 36 is effectively delayed by delaying the clock signal CL supplied to generator 36 rather than delaying the individual R,G,B and blanking output signals S5. This is done by connecting the output of generator 36 directly to the R,G,B amplifier unit 30 and interposing a delay unit 600 in the clock line (bus 26) for generator 36. Delay unit 600 illustratively, may be of the type shown in FIGURE 5.

Turning now to the aspect of the invention illustrated by FIGURES 1'-3', the receiver of FIGURE 1' includes an antenna input terminal 110 for connection to a source of RF modulated video signals such as a standard broadcast signal, a cable signal or the RF output of a video tape recorder, a video disc player, computer, a video game unit or the like. Terminal 110 is coupled to the input of a voltage controlled tuner 112 which is able to select a particular one of a relatively large number of television channels by tuning control voltage on signal S1' supplied thereto. The tuning control signal S1' is provided by means of a conventional FS (frequency synthesis) tuning logic unit 114 (e.g., a phase lock loop, PLL). Unit 114 multiples the frequency of a reference signal S2' provided by a crystal oscillator 116 by a number related to the desired television channel selected by the user of the receiver. The frequency of the crystal 118 which controls oscillator 116 is typically about 4 MHz (e.g., 3.90625 MHz) for NTSC standard TV Channel assignments.

The output signal S3' of tuner 112 is an IF (intermediate frequency) signal corresponding to the TV channel selected by the user of the receiver by means of tuning logic unit 114 and is applied to a video processing unit 120 which includes a conventional IF amplifier, video detector and other video signal processing circuits (e.g., hue and saturation controls, AGC circuits, etc.). Unit 120 includes an auxiliary (AUX.) input terminal for connection to a source of baseband video input signal in so-called "monitor" applications when the tuner 112 is not used. The processed baseband video signal S4' provided by unit 120 is applied to a conventional synchronizing unit 122 and to a display unit 124 (e.g., a kinescope, projection unit or the like). Unit 122 generates vertical synchronizing signals (VS) and horizontal synchronizing signals (HS) for display unit 124 so as to display the signal S4' in conventional raster scan form on unit 124.

The receiver includes a raster scan character generator 126 having an input terminal 128 for connection to a source of character data (e.g., time, channel identification, teletext, etc.) to be displayed on unit 124 along with (or in place of) the video signal S4' and an output for supplying the character data signal (S5') in raster scan form to unit 124. Generator 126 is of conventional design and includes inputs coupled to receive the vertical and horizontal synchronizing signals (VS and HS, respectively) provided by synchronizing unit 122 for controlling the position of alphanumeric data or graphic symbols to be displayed on unit 124.

In accordance with this aspect of the invention, the timing of individual character elements (i.e., character "dots" or "pixels") of the character signal S5' is controlled by means of a high frequency clock signal S6' derived from the "free-running" oscillator 116. The term "free-running" as used herein, means that oscillator 116, although very stable and accurate, is not synchronized with the horizontal synchronizing component of the video signal S4' and therefore the clock signal S2' has an indeterminate phase or timing relationship with the horizontal synchronizing component HS of video signal S4'.

The clock signal S6' is produced by applying the crystal oscillator signal S2' to a delay unit 130 which generates a plurality of phases of the (4 MHz) clock signal S2'. In essence, control unit 140 compares the horizontal synchronizing signal HS with the output signal S7' of delay unit 130 to identify the particular one of the multi-phase clock signals which happens to be most closely in-phase with a specified point on the horizontal synchronizing signal waveform as will be explained subsequently. Unit 140 supplies a clock delay identification signal S8' to a delay selector unit 150 which, in turn, selects the most closely in-phase one of the delayed clock signals S7' for application to the clock input terminal 127 of character generator 126.

Summarizing the foregoing, control unit 140 in combination with delay unit 130 measures the phase or time difference between a given point on the horizontal synchronizing signal HS and the clock signal S2' at the start of each line and, by means of delay selector 150, effectively imparts a delay to the signal S2' to maintain the phase of the clock signal S6' supplied to generator 126 relatively constant with respect to the horizontal synchronizing signal HS on a line-by-line basis. The "jitter" or line-to-line timing variations of the processed (delayed) clock signal S6' is proportional to the number of phases of the signal S7' produced in delay unit 130. If, for example, a clock cycle is divided into eight phases, then the maximum line-to-line jitter of displayed character dots or pixels produced by generator 126 will correspond to only one-eighth of one clock cycle. Accordingly, even though the clock signal S2' is not phase locked to the horizontal synchronizing signal HS, characters displayed on unit 124 (which is synchronized with HS) will have a uniform vertical alignment. Thus, in the receiver of FIGURE 1' a separate "line-locked" oscillator is not needed for character generation. Moreover, the "on screen display" logic elements 130, 140, 150, 126) may be incorporated on the same integrated circuit as the FS tuning logic unit 114 thereby eliminating the need for any additional clock input pins for the character generator 126.

FIGURE 2' is a detailed logic diagram illustrating a specific implementation of units 130,140 and 150 of FIGURE 1'. The delay unit 130 comprises a cascade connection of eight delay elements (201-208) having an input coupled to receive the 4 MHz clock signal S2' and output taps for providing individual phases of the clock signal (P1-P9). The total delay of the delay line should be somewhat greater than the period of one (1) cycle of the 4 MHz clock signal S2' e.g., about 300 to 400 nanoseconds. Such a delay can be realized in a polysilicon signal path of appropriate length on an NMOS integrated circuit. Alternatively, the desired delay may be implemented by means of a series of inverters, two (2) between each tap point.

As illustrated in FIGURE 3', each section (201-208) of delay line 130 delays the 4 MHz clock signal S2' by about 45 nanoseconds. Shorter or longer delays can be utilized depending on how many different phases are desired for reducing the edge jitter of displayed characters. Since, as a practical matter, a delay of exactly 45 nanoseconds cannot be controlled precisely from unit to unit in a conventional manufacturing process or may be subject to variation with temperature or voltage, the logic circuits are designed to accommodate reasonable changes in the delays. Specifically, the total nominal delay of unit 130 is selected to be about 315 nanoseconds which is longer than the 250 nanoseconds period of the 4 MHz clock signal S2' to allow for delay line tolerance variations.

Unit 140, comprises eight AND gates 211-218, each having a first input coupled to receive the horizontal synchronizing signal HS, a second input coupled to receive a respective one of the clock signal S2' phases (P1-P9) and an output coupled to the clock input ("C") of a respective one of eight data ("D") type flip-flops 221-228. The data ("D") input of each flip-flop is connected to a source (not shown) of positive potential corresponding to a logic "1" value. Each flip-flop has a reset input (R) coupled to the "true" (Q) output of the immediately following flip-flop with the reset input of the last flip-flop 228 being coupled to receive the output of delay element 208 (i.e., phase P9).

Delay selector unit 150 comprises eight AND gates 231-238, each having a first input coupled to receive a respective one of the clock phase signals (P1-P8) and having a second input coupled to receive a corresponding one of the flip-flop output signals Q1-Q8. Gate 231, for example, receives P1 and Q1 as inputs. The remaining gates are similarly connected. All outputs of gates 231-238 are applied to an eight-input NOR gate 240 which has an output coupled to the clock (C) input of a "D" flip-flop 250. An inverter 260 applies the Q output of flip-flop 250 to its D (data) input to condition flip-flop 250 to divide the frequency of the pulses applied to its clock input by two. The clock phase P9 is applied to the reset input of flip-flop 250 to provide a consistent starting phase for the division process.

In operation, delay unit 130 provides the nine phases of the clock signal S2' as previously noted. When the horizontal synchronizing signal is high (i.e., sync tip interval, FIGURE 3') gates 211-218 are all primed to apply respective ones of clock phases P1-P9 to the clock input terminals of flip-flops 221-228. Since each flip-flop resets the one preceding it, the flip-flops are clocked sequentially by the phase signals to provide "Q" output signals as shown in FIGURE 3'.

At time T1 the horizontal synchronizing pulse HS makes a transition to logic zero thereby disabling each of AND GATES 211-218. As a result the sequential clocking of flip-flops 221-228 stops and all retain their state at the time T1 when the sync pulse "ended". From the wave forms Q1-Q8 it is seen that at time T1 only flip-flops 222 (Q1) and 227 (Q7) were in a SET condition. This enables AND gates 232 and 237. The remaining AND gates 231, 233-236 and 238 are all disabled since the corresponding flip-flops are reset.

During the interval T1-T2 the outputs of all disabled gates are zero and the outputs of the two primed gates 232 and 237 are high because in this interval clock phases P2 and P7 are both high. Accordingly, the output of NOR gate 240 is low (logic zero). At this time flip-flop 250 is in a reset condition having been reset from the last horizontal synchronizing pulse supplied to its reset input. At times T2-T3 clock phase P2 and phase P7 are both low thereby disabling gates 232 and 237. For this condition all eight inputs to NOR gate 240 are low and the output of gate 240 makes a positive transition and remains high until clock phase P7 disables gate 237 at time T3. Flip-flop 250 is triggered by the positive transition of the output of gate 240 to provide the first half-cycle of the output clock signal S6'.

Thereafter, for the remainder of the line, flip-flop 250 is triggered (clocked) by the trailing edge of clock phase P2 which, as shown, is the closest phase of signal S2' with respect to the signal HS at the moment of the negative transition of signal HS. Since there is a constant delay of one half of one cycle of signal S2' in clocking flip-flop 250, the phase of the output clock signal S7' is delayed with respect to the trailing edge of signal HS by 125 nanoseconds. The pulse to pulse jitter of signal S7' corresponds to the delay time of one stage of unit 130 which, in this example of the invention, is 45 nanoseconds.

## Claims

1. Television display apparatus comprising:
   video processing means (20) coupled to supply a video output signal to a display means (32,) said video output signal having a horizontal synchronizing component;
   oscillator means (18;116/118) for providing a clock signal asynchronous with said horizontal synchronizing component; and
   character generating means (36;126) having an output coupled to said display means (32;124) for supplying a character signal thereto in raster scan form for display with said video signal in said display means, each line of said character signal comprising a plurality of character elements, said character generator means having a timing clock input coupled via a clock signal path to said oscillator means for controlling the timing of said character elements in accordance with a clock signal supplied to it through said clock signal path;
   characterized by synchronization means (40/22;600/22;140/150/160/122) for imparting a delay to the presentation of said character signal to said display means in response to the time relationship between said horizontal synchronization component and said clock signal.

2. Television apparatus as recited in Claim 1, wherein said synchronization means (40/22) for imparting a delay is interposed in a path between said character generator means (36) and said display means (32).

3. Television apparatus as recited in claim 2, wherein said character generator means (36) is of a type providing R,G,B, and blanking output signals and said synchronization means (40/22) for imparting a delay comprises a respective delay means (402,404,406,408) for each of said R,G,B, and blanking output signals and circuit means (410) for applying a skew indicating signal (skew data Bϕ-B4) to a control input each of said delay means.

4. Television apparatus as recited in claim 1, wherein said synchronization means (600/22;140/150/160/122) imparting a delay is interposed in a path between said oscillator means (18) and said character generator means (36) and produces a delayed clock signal which is applied to said character generator means for controlling the timing of said character elements.

5. Television apparatus as recited in any preceding claim, wherein said synchronization means comprises:
   delay means (201-208;508,510,512....N) having a plurality of taps;
   an output terminal; and
   selector means (211-238;502,506) for selectively coupling said taps to said output terminal dependent on said time relationship.

6. Television apparatus as recited in claim 1 wherein said oscillator means (116/118) comprises a free-running oscillator, and said synchronization means (130/140/150/122) is interposed in a path between said oscillator and said character generator means (126) and comprises:
   delay means (130:201-208) having a plurality of taps (P1-P8);

control means (140) coupled to said taps for detecting transitions of delayed clock signal phases with respect to said horizontal synchronizing component (HS) of said video output signal and providing a control signal (S8':Q1-Q8);

an output terminal; and

selector means (150) responsive to said control signal for selectively coupling said taps to said output terminal.

7. Television apparatus as recited in claim 6 wherein:

said delay means (130:201-208) is coupled to said oscillator means (116/118) for providing a plurality of phases (P1-P8) of said clock signal (S2') at said taps:

said control means (140) is coupled to said delay means (130) for providing an indicator signal (Q1-Q8) for identifying one of said phases having a specified timing relation to said horizontal synchronizing component (HS) of said video output signal; and

said selector means (150:231-238) is coupled to said taps and is responsive to said indicator signal for coupling said one of said phases to said timing clock input of said character generator means (126) for reducing line-to-line variations in timing of said character elements.

**Revendications**

1. Appareil d'affichage de télévision comprenant :

un moyen de traitement vidéo (20) couplé pour appliquer un signal de sortie vidéo à un moyen d'affichage (32), ledit signal de sortie vidéo ayant une composante de synchronisation horizontale;

un moyen oscillateur (18; 116/118) pour produire un signal d'horloge asynchrone à la composante de synchronisation horizontale; et

un moyen de génération de caractères (36; 126) ayant une sortie couplée audit moyen d'affichage (32; 124) pour appliquer à celui-ci un signal de caractères sous forme de balayage récurrent pour affichage avec ledit signal vidéo audit moyen d'affichage, chaque ligne dudit signal de caractères comprenant un certain nombre d'éléments de caractère, ledit moyen générateur de caractères ayant une entrée d'horloge de synchronisation couplée via un trajet de signal d'horloge audit moyen oscillateur pour contrôler la synchronisation des éléments de caractère selon un signal d'horloge appliqué à celui-ci à travers ledit trajet du signal d'horloge;

caractérisé par un moyen de synchronisation (40/22; 600/22;140/150/160/122) pour impartir un retard à la présentation dudit signal de caractères audit moyen d'affichage en réponse à la relation de temps entre la composante de synchronisation horizontale et ledit signal d'horloge.

2. Appareil de télévision selon la revendication 1, où le moyen de synchronisation précité (40/22) pour impartir un retard est interposé dans un trajet entre le moyen générateur de caractèresprécité (36) et le moyen d'affichage précité (32).

3. Appareil de télévision selon la revendication 2, où le moyen générateur de caractères précité (36) est d'un type produisant des signaux R,G,B et des signaux de sortie de suppression et le moyen de synchronisation précité (40/22) pour impartir un retard comprend un moyen à retard respectif (402,404,406,408) pour chacun des signaux R,G,B et des signaux de sortie de suppression et un moyen formant circuit (410) pour appliquer un signal d'indication de désalignement (données de désalignement Bφ-B4) à une entrée de commande de chacun desdits moyens à retard.

4. Appareil de télévision selon la revendication 1, où le moyen de synchronisation précité (600/22;140/150/160/122) impartissant un retard est interposé dans un trajet entre le moyen oscillateur précité (18) et le moyen générateur de caractères précité (36) et produit un signal d'horloge retardé qui est appliqué au moyen générateur de caractères pour commander la synchronisation desdits éléments de caractère.

5. Appareil de télévision selon l'une des revendications précédentes, où le moyen de synchronisation précité comprend :

des moyens à retard (201-208;508,510,512 ...N) ayant un certain nombre de bornes; une borne de sortie; et

un moyen sélecteur (211-238;502,506) pour coupler sélectivement lesdites bornes à ladite borne de sortie suivant la relation de temps précitée.

6. Appareil de télévision selon la revendication 1, où le moyen oscillateur précité (116/118) comprend un oscillateur libre et le moyen de synchronisation précité (130/140/150/122) est interposé dans un trajet entre ledit oscillateur et le moyen générateur de caractères précité (126) et comprend :

des moyens à retard (130;201-208) ayant un certain nombre de bornes (P1•P8);

un moyen de commande (140) couplé auxdites bornes pour détecter les transitions de phases de signaux d'horloge retardées par rapport à la composante de synchronisation horizontale précitée (HS) du signal de sortie vidéo précité et produisant un signal de commande (S8':Q1-Q8);

une borne de sortie; et

un moyen sélecteur (150) répondant au signal de commande pour coupler sélectivement lesdites bornes à la borne de sortie précitée.

7. Appareil de télévision selon la revendication 6, où :

les moyens à retard (130:201-208) sont couplés au moyen oscillateur précité (116/118) pour produire un certain nombre de phases (P1-P8) du signal d'horloge précité (S2') aux bornes précitées;

le moyen de commande précité (140) est couplé au moyen à retard (130) pour produire un signal indicateur (Q1-Q8) pour identifier l'une des phases précitées ayant une relation de synchronisation spécifiée à la composante de synchronisation horizontale (HS) du signal de sortie vidéo précité; et

le moyen sélecteur précité (150:231-238) est couplé auxdites bornes et répond au signal indicateur pour coupler l'une desdites phases à l'entrée d'horloge de synchronisation précitée du moyen générateur de caractères précité (126) pour réduire des variations ligne-à-ligne dans le temps desdits éléments de caractère.

**Ansprüche**

1. Fernsehanzeigegerät mit:

einer Videoverarbeitungseinrichtung (20), die für die Speisung einer Anzeigeeinrichtung (32) mit einem Videoausgangssignal, das eine Horizontalsynchronisierkomponente enthält, geschaltet ist;

einer Oszillatoreinrichtung (18; 116/118) zur Lieferung eines bezüglich der Horizontalsynchronisierkomponente asynchronen Taktsignales; und

einer Zeichengeneratoreinrichtung (36; 126) mit einem Ausgang, der mit der Anzeigeeinrichtung (32; 124) gekoppelt ist, um an diese ein Zeichensignal in Rasterabtastform für eine Wiedergabe mit dem Videosignal in der Anzeigeeinrichtung zu liefern, wobei jede Zeile des Zeichensignals eine Mehrzahl von Zeichenelementen enthält, die Zeichengeneratoreinrichtung einen Zeitbestimmungstakteingang aufweist, der über einen Taktsignalweg mit der Oszillatoreinrichtung gekoppelt ist um die Zeichenelemente entsprechend einem Taktsignal, das ihr über den Taktsignalweg zugeführt wird, zeitlich zu steuern;

**gekennzeichnet durch** eine Synchronisiereinrichtung (40/22; 600/22; 140/150/160/122) um der Zuführung des Zeichensignals zur Anzeigeeinrichtung eine Verzögerung in Ansprache auf die Zeitrelation zwischen der Horizontalsynchronisierkomponente und dem Taktsignal zu erteilen.

2. Fernsehgerät nach Anspruch 1, **dadurch gekennzeichnet,** daß die Synchronisiereinrichtung (40/22) zur Erteilung der Verzögerung in einem Weg zwischen der Zeichengeneratoreinrichtung (36) und der Anzeigeeinrichtung (32) eingeschaltet ist.

3. Fernsehgerät nach Anspruch 2, **dadurch gekennzeichnet,** daß die Zeichengeneratoreinrichtung (36) einem Typ angehört, der R-, G-, B- und Austast-Ausgangssignale liefert und daß die Synchronisiereinrichtung (40/22) zur Erteilung der Verzögerung eine entsprechende Verzögerungsvorrichtung (402, 404, 406, 408) für jedes der R-, G-, B- und Austast-Ausgangssignale und eine Schaltungsanordnung (410) zum Zuführen eines schrägeanzeigenden Signales (Schräge-Daten Bφ-B4) zu einem Steuereingang jeder der Verzögerungsvorrichtungen enthält.

4. Fernsehgerät nach Anspruch 1, **dadurch gekennzeichnet,** daß die Synchronisiereinrichtung (600/22; 140/150/160/122) zur Erteilung der Verzögerung in einen Weg zwischen der Oszillatoreinrichtung (18) und der Zeichengeneratoreinrichtung (36) geschaltet ist und ein verzögertes Taktsignal erzeugt, welches der Zeichengeneratoreinrichtung zur Steuerung der Zeiten der Zeichenelemente zugeführt ist.

5. Fernsehgerät nach einem der vorhergehenden Ansprüche, **dadurch gekennzeichnet,** daß die Synchronisiereinrichtung eine Verzögerungsvorrichtung (201-208; 508, 510; 512 ...N) mit einer Mehrzahl von Abgriffen; einen Ausgangsanschluß; und eine Wähleinrichtung (211-238; 502, 506) zum wahlweisen Koppeln der Abgriffe mit dem Ausgangsanschluß in Abhängigkeit von der erwähnten Zeitrelation enthält.

6. Fernsehgerät nach Anspruch 1, **dadurch gekennzeichnet,** daß die Oszillatoreinrichtung (116/118) einen freischwingenden Oszillator enthält und daß die Synchronisiereinrichtung (130/140/150/122) in einen Weg zwischen dem Oszillator und der Zeichengeneratoreinrichtung (126) eingeschaltet ist und eine Verzögerungsvorrichtung (130;201-208) mit einer Mehrzahl von Abgriffen (P1-P8);
eine mit den Abgriffen gekoppelte Steuereinrichtung (140) zur Feststellung von Phasenübergängen des verzögerten Taktsignals bezüglich der Horizontalsynchronisierkomponente (HS) des Videoausgangssignals und zur Erzeugung eines Steuersignals (S8':Q1-Q8);
einen Ausgangsanschluß; und
eine auf das Steuersignal reagierende Wähleinrichtung (150) zum wahlweisen Koppeln der Abgriffe mit dem Ausgangsanschluß, enthält.

7.    Fernsehgerät nach Anspruch 6, **dadurch gekennzeichnet,** daß:
die Verzögerungsvorrichtung (130:201-208) mit der Oszillatoreinrichtung (116/118) gekoppelt ist, um an den Abgriffen eine Mehrzahl von Phasen (P1-P8) des Taktsignals (S2') bereitzustellen,
die Steuereinrichtung (140) mit der Verzögerungsvorrichtung (130) gekoppelt ist, um ein Anzeigesignal (Q1-Q8) zur Identifizierung einer der Phasen, die eine bestimmte Zeitrelation zur Horizontalsynchronisierkomponente (HS) des Videoausgangssignales hat, zu liefern; und
die Wähleinrichtung (150:231-238) mit den Abgriffen gekoppelt ist, um als Reaktion auf das Anzeigesignal die erwähnte eine der Phasen auf den Zeitbestimmungstakteingang der Zeichengeneratoreinrichtung (126) zur Verringerung von Schwankungen der Zeiten der Zeichenelemente von Zeile zu Zeile zu koppeln.

CLOCK SKEW EFFECT

NON-STANDARD
SIGNAL, SKEW
CHANGING

STANDARD SIGNAL
CONSTANT SKEW

SKEW INDUCED JUMP

*Fig. IA*

*Fig. IB*

Fig. 2

Fig. 3

Fig. 4

**Fig. 5**

*Fig. 6*

*Fig. 1'*

Fig. 2'

S2'
4MHZ CLOCK
IN

HS
IN

2 MHZ CLOCK OUT S6'

EP 0 180 450 B1

**Fig. 3'**